# EUROPEAN PATENT APPLICATION

(11) **EP 3 182 715 A2**
(43) Date of publication of application: **21.06.2017**
(21) Application number: 16201999.6
(22) Date of filing: 02.12.2016
(51) Int. Cl.: H04N 21/41, H04N 21/43

(54) **METHOD AND APPARATUS FOR CONTROLLING ELECTRONIC DEVICE**

(30) Priority: 15.12.2015 CN 201510938122
(71) Applicant: Xiaomi Inc., Beijing 100085 (CN)
(72) Inventor: XU, Chao, BEIJING, 100085 (CN); TAN, Kangxi, BEIJING, 100085 (CN); XIU, Tongcai, BEIJING, 100085 (CN)
(74) Representative: Delumeau, François Guy

(57) **Abstract**

The present invention relates to a method and apparatus for controlling an electronic device. The method includes that: a first electronic device to be watched by a user is determined (S101) according to a position of the user, playing information of a file currently played by a second electronic device is determined (S102), the playing information including: an identifier of the file and a playing progress of the file, and first control information is sent (S103) to the first electronic device to control the first electronic device to play the file from the playing progress, the first control information including: the playing information and screen turning-on control information.

## Description

### TECHNICAL FIELD

The present invention generally relates to communication technologies, and more particularly, to a method and apparatus for controlling an electronic device.

### BACKGROUND

Along with development of communication technologies, there are more and more electronic devices at a user's home, such as a television, a tablet and a notebook computer.

In the related arts, when a user watches a video or pictures with a television in a living room, if a position of the user changes, for example, the user moves from the living room to a bedroom, if the user wants to continue watching the same video or the same group of pictures on an electronic device, such as a tablet, located in the bedroom, the user is required to turn on the electronic device and then drag on a progress bar to continue watching from a position where watching is stopped.

### SUMMARY

Accordingly, the present invention provides a method and apparatus for controlling an electronic device, in accordance with claims which follow.

According to a first aspect of the embodiment of the present invention, there is provided a method for controlling an electronic device, including:
a first electronic device to be watched by a user is determined according to a position of the user;
playing information of a file currently played by a second electronic device is determined, wherein the playing information may include: an identifier of the file and a playing progress of the file; and
first control information is sent to the first electronic device to control the first electronic device to play the file from the playing progress, wherein the first control information includes: the playing information and screen turning-on control information.

In such a manner, the first electronic device to be watched by the user may be automatically determined according to the position of the user, a screen of the first electronic device to be watched may be controlled to be turned on and the playing information of the file currently played by the second electronic device may be sent to the first electronic device, so that determination of the electronic device to be watched by the user according to the position of the user is implemented, playing of the file from the playing progress is also implemented, and compared with a manner of manually turning on the electronic device and dragging a progress bar by the user, such a manner improves a user experience.

According to an exemplary embodiment, after the step that the first control information is sent to the first electronic device, the method may further include that:
second control information is sent to the second electronic device to control the second electronic device to stop playing and turn off its screen.

According to an exemplary embodiment, before the step that the first electronic device to be watched by the user is determined according to the position of the user, the method may further include that:
facial images detected by cameras of all electronic devices located at different positions are acquired; and
the step that the first electronic device to be watched by the user is determined according to the position of the user may include that:
if the facial image detected by a camera of an electronic device and a preset facial image are determined as facial images of the same user, the electronic device is determined to be the first electronic device.

In such a manner, the first electronic device to be watched by the user may be determined according to whether the facial image detected by the camera of the electronic device and the preset facial image are facial images of the same user or not when being determined according to the position of the user, the playing information sent by the second electronic device is received, and a first electronic device determination process and the playing information have high accuracy, so that the user experience is further improved.

According to an exemplary embodiment, before the step that the first electronic device to be watched by the user is determined according to the position of the user, the method may further include that:
signal strengths of connecting signals of all electronic devices located at different positions are acquired, wherein a connecting signal of each electronic device is used to connect this electronic device with a third electronic device, wherein the third electronic device may be electronic device worn by the user; and
the step that the first electronic device to be watched by the user is determined according to the position of the user may include that:
the connecting signal strengths are compared with each other, and an electronic device, of which the connecting signal strength is the strongest, is determined to be the first electronic device.

In such a manner, an electronic device, of which the connecting signal strength is the strongest with the third electronic device, may be determined to be the first electronic device according to the connecting signal strengths, and accuracy is high, so that the user experience is further improved.

According to an exemplary embodiment, the step that the playing information of the file currently played by the second electronic device is determined may include that:
the playing information sent by the second electronic device is received, wherein the playing information may be sent when the facial image detected by the second electronic device and the preset facial image are determined not to be facial images of the same user, or,
wherein the playing information may be sent when the second electronic device does not detect any facial image.

According to an exemplary embodiment, before the step that the playing information of the file currently played by the second electronic device is determined, the method may further include that:
a playlist is queried, and the electronic device which plays the file at time that is the closest to the current time is determined to be the second electronic device, wherein the playlist may record corresponding relationship between times at which files are played and electronic devices which play the files;
the step that the playing information of the file currently played by the second electronic device is determined may include that:
a playing information acquisition request is sent to the second electronic device; and
the playing information sent by the second electronic device in response to the playing information acquisition request is received.

According to an exemplary embodiment, the third electronic device may be a wristband, and the connecting signals may be Bluetooth signals.

According to a second aspect of the embodiment of the present invention, there is provided an apparatus for controlling an electronic device, including:
a first determination module configured to determine a first electronic device to be watched by a user according to a position of the user;
a second determination module configured to determine playing information of a file currently played by a second electronic device, wherein the playing information may include: an identifier of the file and a playing progress of the file; and
a first sending module configured to send first control information to the first electronic device to control the first electronic device to play the file from the playing progress, wherein the first control information may include: the playing information and screen turning-on control information.

According to a particular embodiment, the apparatus may further include:
a second sending module configured to send second control information to the second electronic device to control the second electronic device to stop playing and turn off its screen.

According to a particular embodiment, the apparatus may further include:
a first acquisition module configured to acquire facial images detected by cameras of all electronic devices located at different positions; and
the first determination module may include:
a first determination sub-module configured to, if the facial image detected by the camera of an electronic device and a preset facial image are determined as facial images of the same user, determine the electronic device to be the first electronic device.

According to a particular embodiment, the apparatus may further include:
a second acquisition module configured to acquire signal strengths of connecting signals of all electronic devices located at different positions, wherein a connecting signal of each electronic device is used to connect this electronic device with a third electronic device, wherein the third electronic device may be an electronic device worn by the user;
the first determination module may include:
a comparison sub-module configured to compare the connecting signal strengths with each other; and
a second determination sub-module configured to determine an electronic device, of which the connecting signal strength is the strongest, to be the first electronic device.

According to a particular embodiment, the second determination module may include:
a first receiving sub-module configured to receive the playing information sent by the second electronic device, wherein the playing information may be sent when the facial image detected by the second electronic device and the preset facial image are determined not to be facial images of the same user, or, wherein the playing information may be sent when the second electronic device does not detect any facial image.

According to a particular embodiment, the apparatus may further include:
a query module configured to query a playlist;
a third determination module configured to determine an electronic device which plays the file at time that is the closest to the current time to be the second electronic device, wherein the playlist may record corresponding relationship between times at which files are played and electronic devices which play the files;
the second determination module may include:
a sending sub-module configured to send a playing information acquisition request to the second electronic device; and
a second receiving sub-module configured to receive the playing information sent by the second electronic device in response to the playing information acquisition request.

According to a particular embodiment, the third electronic device may be a wristband, and the connecting signals may be Bluetooth signals.

According to a third aspect of the embodiment of the present invention, there is provided an apparatus for controlling an electronic device, including:
a processor; and
a memory for storing instructions executable by the processor,
wherein the processor may be configured to:
determine a first electronic device to be watched by a user according to a position of the user;
determine playing information of a file currently played by a second electronic device, wherein the playing information may include: an identifier of the file and a playing progress of the file; and
send first control information to the first electronic device to control the first electronic device to play the file according to the playing progress, wherein the first control information may include: the playing information and screen turning-on control information.

The advantages and technical effects of the apparatuses according to the invention correspond to those of the method presented above.

In one particular embodiment, the steps of the method for controlling an electronic device are determined by computer program instructions.

Consequently, according to a fourth aspect, the invention is also directed to a computer program for executing the steps of a method for controlling an electronic device as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that the above general descriptions and detailed descriptions below are only exemplary and explanatory and not intended to limit the present invention.

### BRIEF DESCRIPTION OF THE DRAWINGS

The accompanying drawings, which are incorporated in and constitute a part of this specification, illustrate embodiments consistent with the present invention and, together with the specification, serve to explain the principles of the present invention.
Fig. 1 is a flow chart showing a method for controlling an electronic device, according to an exemplary embodiment;
Fig. 2 is a flow chart showing a method for controlling an electronic device, according to another exemplary embodiment;
Fig. 3 is a flow chart showing a method for controlling an electronic device, according to another exemplary embodiment;
Fig. 4 is a block diagram of an apparatus for controlling an electronic device, according to an exemplary embodiment;
Fig. 5 is a block diagram of an apparatus for controlling an electronic device, according to another exemplary embodiment;
Fig. 6 is a block diagram of an apparatus for controlling an electronic device, according to another exemplary embodiment;
Fig. 7 is a block diagram of an apparatus for controlling an electronic device, according to another exemplary embodiment;
Fig. 8 is a block diagram of an apparatus for controlling an electronic device, according to an exemplary embodiment; and
Fig. 9 is a block diagram of an apparatus for controlling an electronic device, according to an exemplary embodiment.

The drawings have shown clear embodiments of the present invention, and more detailed descriptions will be made hereinafter. These drawings and textual descriptions are intended not to limit the scope of concept of the present invention in any manner but to describe the concept of the present invention for those skilled in the art with reference to specific embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present invention. Instead, they are merely examples of apparatuses and methods consistent with aspects related to the present invention as recited in the appended claims.

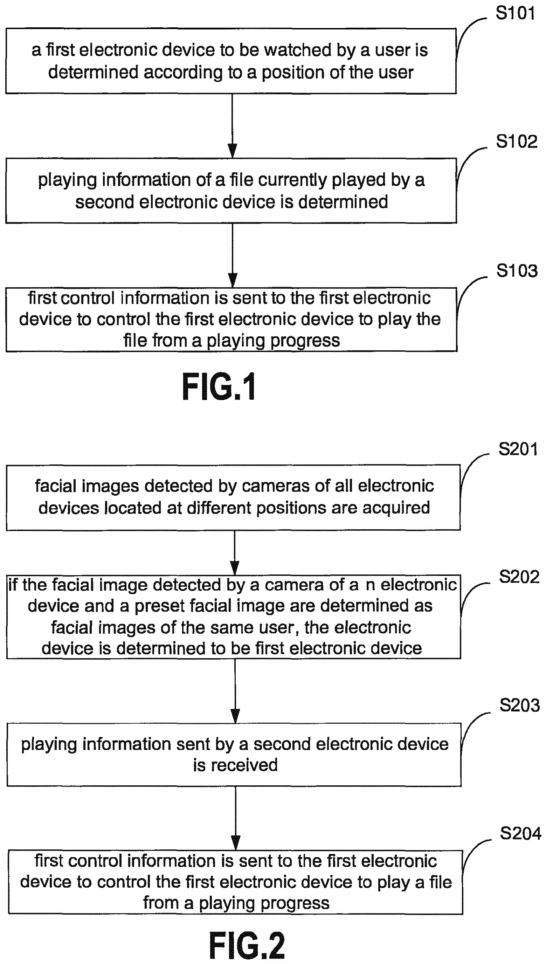

Fig. 1 is a flow chart showing a method for controlling an electronic device, according to an exemplary embodiment. As shown in Fig. 1, the method for controlling an electronic device provided by the embodiment includes the following steps. The method is suitable to be implemented by a control center, for example, a server or an electronic device.
Step S101: a first electronic device to be watched by a user is determined according to a position of the user.

The method for controlling an electronic device provided by the embodiment may be applied to a scenario where there are multiple electronic devices in a home of the user, and the electronic device here may be electronic device with a video playing function, and may be, for example, a television, a notebook computer, a tablet or a mobile phone. These electronic devices may be controlled by a common remote server which controls these electronic devices for example via a wired or wireless network; and any electronic device may also be determined as a control center, and the electronic device which serves as the control center controls these electronic devices. That is, the first electronic device to be watched by the user may be determined by the remote server according to the position of the user, or, the first electronic device to be watched by the user may also be determined by the electronic device which serves as the control center according to the position of the user. For convenient description, the control center refers to a remote server or an electronic device.

The position of the user may be determined implemented in a manner that the first electronic device to be watched by the user is determined through facial images detected by cameras of electronic device located at different positions in the home of the user, and may also be implemented in a manner that the first electronic device to be watched by the user is determined according to the position of the user in another manner. There are no limits made in the embodiment.
Step S102: playing information of a file currently played by a second electronic device is determined.

Wherein, the playing information includes: an identifier of the file and a playing progress of the file.

The second electronic device is an electronic device which is watched before the user watches the first electronic device. In an implementation mode, the control center may query a stored playlist to determine the second electronic device which currently plays the file and send a playing information acquisition request to the second electronic device, the second electronic device sends the playing information to the control center after receiving the playing information acquisition request, and the control center receives the playing information of the currently file from the second electronic device.

The identifier of the file in the playing information may be information such as a name and link of the file. The file here may be a video file, a picture file and the like.
Step S103: first control information is sent to the first electronic device to control the first electronic device to play the file from the playing progress.

Wherein, the first control information includes: the playing information and screen turning-on control information.

After determining the playing information of the file currently played by the second electronic device, the control center sends the first control information to the first electronic device to control the first electronic device to turn on a screen and play the file from the playing progress.

It is important to note that if an execution main body of the above method is an electronic device which serves as the control center, the electronic device may be connected with other electronic devices through a Wireless Fidelity (WIFI) technology, a ZigBee protocol, a Bluetooth technology and the like.

The file currently played by the second electronic device may be an online video, and may also be a local video. When the file is an online video, the identifier of the file includes a filename and a source link of the file, so that the first electronic device may acquire the file from the source link according to the identifier of the file in the first control information and play the file from the playing progress after receiving the first control information; and when the file is a local video, the identifier of the file includes a filename and an identifier of the second electronic device, so that the first electronic device may acquire the file from the second electronic device according to the identifier of the second electronic device and play the file from the playing progress after receiving the first control information.

According to the method for controlling an electronic device provided by the embodiment, by determining the first electronic device to be watched by the user according to the position of the user, determining the playing information of the file currently played by the second electronic device, the playing information including: the identifier of the file and the playing progress of the file, and sending the first control information to the first electronic device to control the first electronic device to play the file from the playing progress, the first control information including: the playing information and the screen turning-on control information, the first electronic device to be watched by the user may be automatically determined according to the position of the user, the screen of the first electronic device to be watched may be controlled to be turned on and the playing information of the file currently played by the second electronic device may be sent to the first electronic device, so that determination of the electronic device to be watched by the user according to the position of the user is implemented, playing of the file from the playing progress is also implemented, and compared with a manner of manually turning on the electronic device and dragging a progress bar by the user, such a manner improves a user experience.

Furthermore, in the embodiment shown in Fig. 1, after Step S103, the method further includes that: second control information is sent to the second electronic device to control the second electronic device to stop playing and turn off its screen.

Since the user has stopped watching the second electronic device, it is necessary to make the second electronic device stop playing and turn off its screen. The second control information is sent to the second electronic device through the control center to make the second electronic device stop playing and turn off the screen, so that energy consumption is reduced.

Fig. 2 is a flow chart showing a method for controlling an electronic device, according to another exemplary embodiment. On the basis of the embodiment shown in Fig. 1, a step before the step that the first electronic device to be watched by the user is determined according to the position of the user, the step that the first electronic device to be watched by the user is determined according to the position of the user and the step that the playing information of the file currently played by the second electronic device are described in detail in the embodiment, and as shown in Fig. 2, the method for controlling an electronic device provided by the embodiment includes the following steps.
Step S201: facial images detected by cameras of all electronic devices located at different positions are acquired.
Step S202: if the facial image detected by a camera of an electronic device and a preset facial image are determined as facial images of the same user, the electronic device is determined to be a first electronic device.

The cameras of the electronic device located at different positions detect the facial images appearing in their viewing angles at set frequencies (or intervals). The preset facial image is a facial image which is set in the control center in advance, and the preset facial image here may be a facial image of the user in need of using the method for controlling an electronic device provided by the embodiment. The control center acquires the facial images detected by the cameras of all the electronic devices located at different positions at a set frequency. When the facial image detected by the camera of an electronic device and the preset facial image are determined as facial images of the same user (this determination may be realized by facial image processing techniques known in the prior art and is not described herein), the control center determines the electronic device to be the first electronic device to be watched by the user, which indicates that the user moves to the front of the first electronic device and is prepared to watch the first electronic device.
Step S203: playing information sent by a second electronic device is received.

Wherein, the playing information is sent when the facial image detected by the second electronic device and the preset facial image are determined not to be facial images of the same user, or, wherein the playing information is sent when the second electronic device does not detect any facial image.

When the facial image detected by the second electronic device and the preset facial image are not facial images of the same user, or, when the second electronic device does not detect any facial image, it is indicated that the user has left the second electronic device. The second electronic device sends the playing information to the control center.

In a file playing process of the second electronic device, the camera of the second electronic device detects a facial image in its viewing angle at a set frequency, and when determining that the user leaves the second electronic device by not detecting a facial image for a certain period, the second electronic device sends the playing information of a file currently watched by the user, i.e. currently played by the second electronic device, to the control center. The control center receives the playing information sent by the second electronic device.
Step S204: first control information is sent to the first electronic device to control the first electronic device to play the file from a playing progress.

Wherein, the first control information includes: the playing information and screen turning-on control information.

The step is similar to an implementation process of Step S103, and will not be elaborated herein.

According to the method for controlling an electronic device provided by the embodiment, by acquiring the facial images detected by the cameras of all the electronic devices located at different positions, if the facial image detected by the camera of an electronic device and the preset facial image are facial images of the same user, determining the electronic device to be the first electronic device, receiving the playing information sent by the second electronic device, the playing information being sent when the facial image detected by the second electronic device and the preset facial image are not facial images of the same user, or, the playing information being sent when the second electronic device does not detect any facial image, and sending the first control information to the first electronic device to control the first electronic device to play the file from the playing progress, the first electronic device to be watched by the user may be determined according to whether the facial image detected by the camera of the electronic device and the preset facial image are facial images of the same user or not when being determined according to a position of the user, the playing information sent by the second electronic device is received, and a first electronic device determination process and the playing information have high accuracy, so that the user experience is further improved.

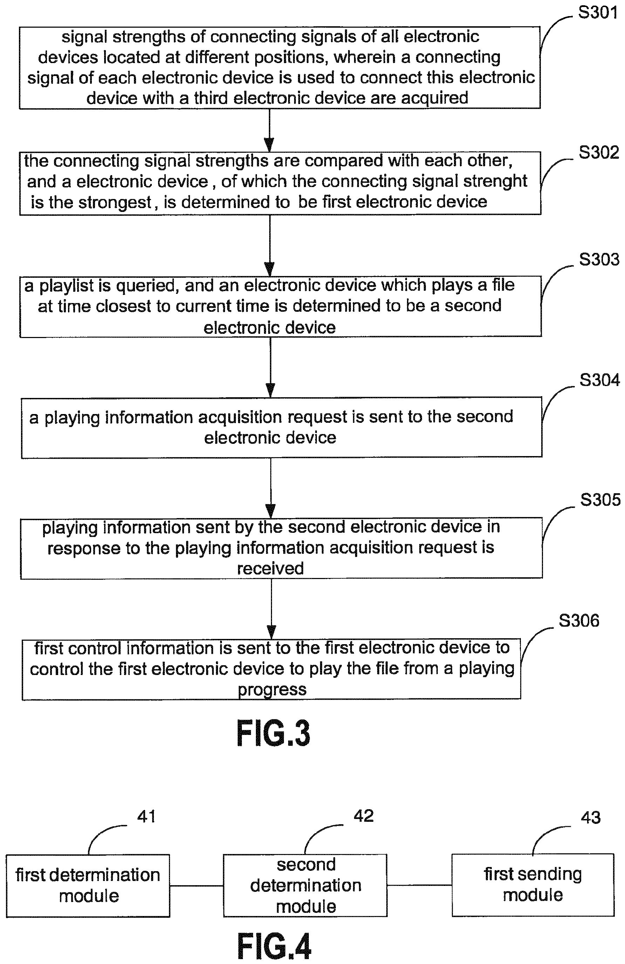

Fig. 3 is a flow chart showing a method for controlling an electronic device, according to another exemplary embodiment. On the basis of the embodiment shown in Fig. 1, the step before the step that the first electronic device to be watched by the user is determined according to the position of the user, the step that the first electronic device to be watched by the user is determined according to the position of the user and the step that the playing information of the file currently played by the second electronic device are described in detail in the embodiment, and as shown in Fig. 3, the method for controlling an electronic device provided by the embodiment includes the following steps.
Step S301: signal strengths of connecting signals of all electronic devices located at different positions are acquired, wherein a connecting signal of each electronic device is used to connect this electronic device with a third electronic device .

Wherein, the third electronic device is an electronic device worn by a user.
Step S302: the connecting signal strengths are compared with each other, and an electronic device, of which the connecting signal strength is the strongest, is determined to be first electronic device.

The third electronic device may be wearable equipment, for example, a wristband. The connecting signals may be Bluetooth signals. The connecting signals exist between the third electronic device and all the electronic devices located at different positions. When the third electronic device is closer to an electronic device, the strength of the connecting signal between it and the electronic device is stronger. An electronic device, of which the connecting signal strength is the strongest with the third electronic device, is determined to be the first electronic device. Since the third electronic device is the electronic device worn by the user, when the strength of the connecting signal between the third electronic device and an electronic device is strongest, it is indicated that the user is closest to the electronic device and prepared to watch the electronic device.
Step S303: a playlist is queried, and an electronic device which plays a file at time that is the closest to the current time is determined to be a second electronic device.

Wherein, the playlist records corresponding relationship between times at which files are played (or opened) and electronic devices which play the files.

For example, the playlist may be "time of playing a file: 13:00, the electronic device which plays the file: tablet; time of playing a file: 15:00, the electronic device which plays the file: television", and if the current time is 15:13, the electronic device which plays the file at the time closest to the current time is the television, and the television is determined to be the second electronic device.
Step S304: a playing information acquisition request is sent to the second electronic device.
Step S305: playing information sent by the second electronic device in response to the playing information acquisition request is received.

A control center sends the playing information acquisition request to the second electronic device. The second electronic device receives the playing information acquisition request sent by the control center, and sends the playing information to the control center in response to the playing information acquisition request. The control center receives the playing information sent by the second electronic device in response to the playing information acquisition request.
Step S306: first control information is sent to the first electronic device to control the first electronic device to play the file from a playing progress.

Wherein, the first control information includes: the playing information and screen turning-on control information.

It is important to note that the playing information may also be determined in a manner adopted in Step S203 in the embodiment.

According to the method for controlling an electronic device provided by the embodiment, by acquiring the connecting signal strengths of each of all electronic devices located at different positions with the third electronic device respectively, comparing the connecting signal strengths, determining an electronic device, of which the connecting signal strength is the strongest with the third electronic device, to be the first electronic device, querying the playlist, determining the electronic device which plays the file at the time closest to the current time to be the second electronic device, sending the playing information acquisition request to the second electronic device, receiving the playing information sent by the second electronic device in response to the playing information acquisition request, and sending the first control information to the first electronic device to control the first electronic device to play the file from the playing progress, an electronic device, of which the connecting signal strength is the strongest with the third electronic device, may be determined to be the first electronic device according to the connecting signal strengths, and accuracy is high, so that the user experience is further improved.

Fig. 4 is a block diagram of an apparatus for controlling an electronic device, according to an exemplary embodiment. As shown in Fig. 4, the apparatus for controlling an electronic device provided by the embodiment includes:
a first determination module 41 configured to determine a first electronic device to be watched by a user according to a position of the user;
a second determination module 42 configured to determine playing information of a file currently played by a second electronic device,
wherein the playing information includes: an identifier of the file and a playing progress of the file; and
a first sending module 43 configured to send first control information to the first electronic device to control the first electronic device to play the file from the playing progress,
wherein the first control information includes: the playing information and screen turning-on control information.

The apparatus for controlling an electronic device provided by the embodiment may specifically be configured to execute the method of the embodiment shown in Fig. 1, and its implementation principle is similar, and will not be elaborated herein.

According to the apparatus for controlling an electronic device provided by the embodiment, by the first determination module configured to determine the first electronic device to be watched by the user according to the position of the user, the second determination module configured to determine the playing information of the file currently played by the second electronic device, the playing information including: the identifier of the file and the playing progress of the file, and the first sending module configured to send the first control information to the first electronic device to control the first electronic device to play the file from the playing progress, the first control information including: the playing information and the screen turning-on control information, the first electronic device to be watched by the user may be automatically determined according to the position of the user, a screen of the first electronic device to be watched may be controlled to be turned on and the playing information of the file currently played by the second electronic device may be sent to the first electronic device, so that determination of the electronic device to be watched by the user according to the position of the user is implemented, playing of the file from the playing progress is also implemented, and compared with a manner of manually turning on the electronic device and dragging a progress bar by the user, such a manner improves a user experience.

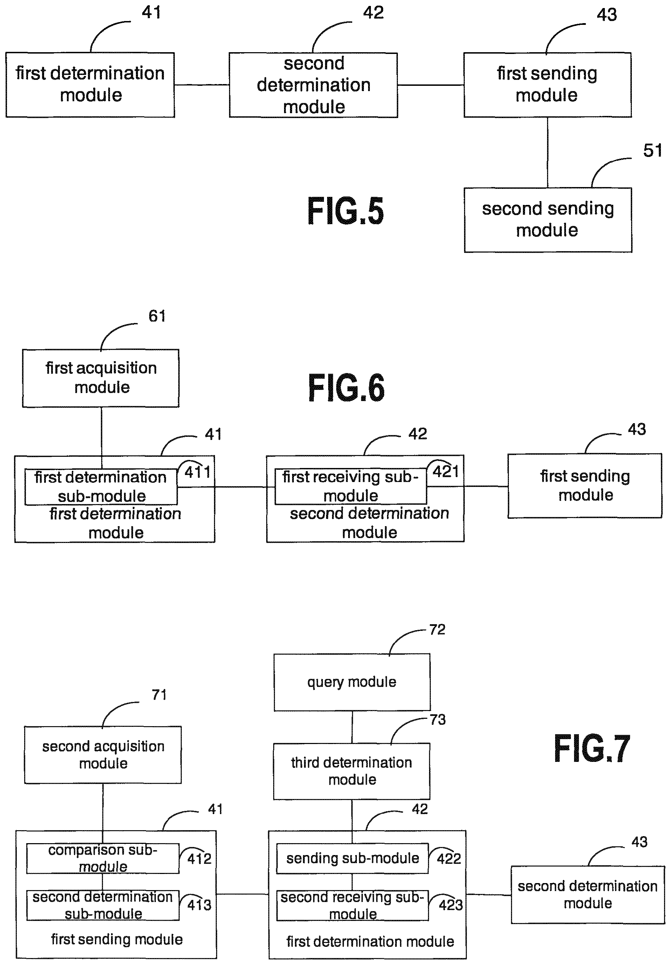

Fig. 5 is a block diagram of an apparatus for controlling an electronic device, according to another exemplary embodiment. As shown in Fig. 5, the apparatus for controlling an electronic device provided by the embodiment, on the basis of the embodiment shown in Fig. 4, further includes:
a second sending module 51 configured to send second control information to the second electronic device to control the second electronic device to stop playing and turn off its screen.

According to the apparatus for controlling an electronic device provided by the embodiment, by the second sending module configured to send the second control information to the second electronic device to control the second electronic device to stop playing and turn off the screen, energy consumption is reduced.

Fig. 6 is a block diagram of an apparatus for controlling an electronic device, according to another exemplary embodiment. As shown in Fig. 6, the apparatus for controlling an electronic device provided by the embodiment, on the basis of the embodiment shown in Fig. 4, includes:
a first acquisition module 61 configured to acquire facial images detected by cameras of all electronic devices located at different positions.

The first determination module 41 includes:
a first determination sub-module 411 configured to, if the facial image detected by the camera of an electronic device and a preset facial image are facial images of the same user, determine the electronic device to be the first electronic device.

The second determination module 42 includes:
a first receiving sub-module 421 configured to receive the playing information sent by the second electronic device.

Wherein, the playing information is sent when the facial image detected by the second electronic device and the preset facial image are not facial images of the same user, or, the playing information is sent when the second electronic device does not detect any facial image.

The apparatus for controlling an electronic device provided by the embodiment may specifically configured to execute the method of the embodiment shown in Fig. 2, and its implementation principle is similar, and will not be elaborated herein.

According to the apparatus for controlling an electronic device provided by the embodiment, by the first acquisition module configured to acquire the facial images detected by the cameras of all the electronic devices located at different positions, the first determination module configured to, if the facial image detected by the camera of an electronic device and the preset facial image are facial images of the same user, determine the electronic device to be the first electronic device, the first receiving sub-module configured to receive the playing information sent by the second electronic device, the playing information being sent when the facial image detected by the second electronic device and the preset facial image are not facial images of the same user, or, the playing information being sent when the second electronic device does not detect any facial image, and the first sending module configured to send the first control information to the first electronic device to control the first electronic device to play the file from the playing progress, the first electronic device to be watched by the user may be determined according to whether the facial image detected by the camera of the electronic device and the preset facial image are facial images of the same user or not when being determined according to the position of the user, the playing information sent by the second electronic device is received, and a first electronic device determination process and the playing information have high accuracy, so that the user experience is further improved.

Fig. 7 is a block diagram of an apparatus for controlling an electronic device, according to another exemplary embodiment. As shown in Fig. 7, the apparatus for controlling an electronic device provided by the embodiment, on the basis of the embodiment shown in Fig. 4, includes:
a second acquisition module 71 configured to acquire connecting signal strengths of each of all electronic devices located at different positions with a third electronic device respectively.

Wherein, the third electronic device is an electronic device worn by the user.

The first determination module 41 includes:
a comparison sub-module 412 configured to compare the connecting signal strengths; and
a second determination sub-module 413 configured to determine an electronic device, of which the connecting signal strength is the strongest with the third electronic device, to be the first electronic device.

A query module 72 is configured to query a playlist.

A third determination module 73 is configured to determine the electronic device which plays the file at time closest to current time to be the second electronic device.

Wherein, the playlist records corresponding relationship between times of playing files and electronic devices which play files.

The second determination module 42 includes:
a sending sub-module 422 configured to send a playing information acquisition request to the second electronic device; and
a second receiving sub-module 423 configured to receive the playing information sent by the second electronic device in response to the playing information acquisition request.

In an implementation mode, the third electronic device is a wristband, and the connecting signals are Bluetooth signals.

The apparatus for controlling an electronic device provided by the embodiment may specifically be configured to execute the method of the embodiment shown in Fig. 3, and an implementation principle is similar, and will not be elaborated herein.

According to the apparatus for controlling an electronic device provided by the embodiment, by the second acquisition module configured to acquire connecting signal strengths of each of all electronic devices located at different positions with the third electronic device respectively, the comparison sub-module configured to compare the connecting signal strengths, the second determination sub-module configured to determine an electronic device, of which the connecting signal strength is the strongest with the third electronic device, to be the first electronic device, the query module configured to query the playlist, the third determination module configured to determine the electronic device which plays the file at the time closest to the current time to be the second electronic device, the sending sub-module configured to send the playing information acquisition request to the second electronic device, the second receiving sub-module configured to receive the playing information sent by the second electronic device in response to the playing information acquisition request, and the first sending module configured to send the first control information to the first electronic device to control the first electronic device to play the file from the playing progress, an electronic device, of which the connecting signal strength is the strongest with the third electronic device, may be determined to be the first electronic device according to the connecting signal strengths, and accuracy is high, so that the user experience is further improved.

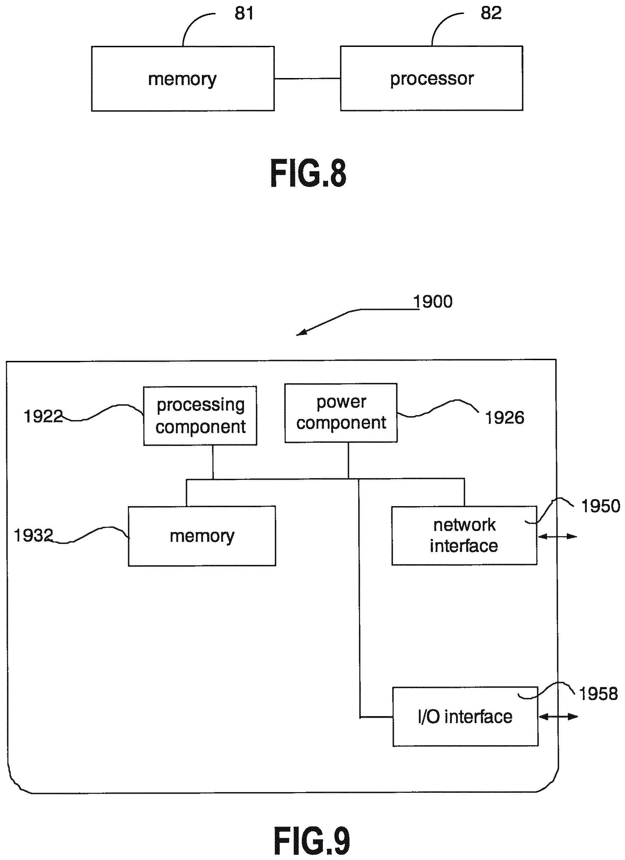

Fig. 8 is a block diagram of an apparatus for controlling an electronic device, according to an exemplary embodiment. As shown in Fig. 8, the apparatus for controlling an electronic device provided by the embodiment includes:
a processor 82; and
a memory for storing instructions executable by the processor 82,
wherein the processor 82 is configured to:
determine a first electronic device to be watched by a user according to a position of the user;
determine playing information of a file currently played by a second electronic device, wherein the playing information includes: an identifier of the file and a playing progress of the file; and
send first control information to the first electronic device to control the first electronic device to play the file from the playing progress, wherein the first control information includes: the playing information and screen turning-on control information.

According to the apparatus for controlling an electronic device provided by the embodiment, by the processor configured to determine the first electronic device to be watched by the user according to the position of the user, determine the playing information of the file currently played by the second electronic device, the playing information including: the identifier of the file and the playing progress of the file, and send the first control information to the first electronic device to control the first electronic device to play the file from the playing progress, the first control information including: the playing information and the screen turning-on control information, the first electronic device to be watched by the user may be automatically determined according to the position of the user, a screen of the first electronic device to be watched may be controlled to be turned on and the playing information of the file currently played by the second electronic device may be sent to the first electronic device, so that determination of the electronic device to be watched by the user according to the position of the user is implemented, playing of the file from the playing progress is also implemented, and compared with a manner of manually turning on the electronic device and dragging a progress bar by the user, such a manner improves a user experience.

Fig. 9 is a block diagram of an apparatus for controlling an electronic device, according to an exemplary embodiment. For example, the apparatus 1900 may be provided as a server. Referring to Fig. 9, the apparatus 1900 includes a processing component 1922, which further includes one or more processors, and a memory resource represented by a memory 1932 configured to store instructions such as application programs executable for the processing component 1922. The application programs stored in the memory 1932 may include one or more than one module of which each corresponds to a set of instructions. In addition, the processing component 1922 is configured to execute the instructions to execute the abovementioned method including that: the first electronic device to be watched by the user is determined according to the position of the user; the playing information of the file currently played by the second electronic device is determined, wherein the playing information includes: the identifier of the file and the playing progress of the file; and the first control information is sent to the first electronic device to control the first electronic device to play the file from the playing progress, wherein the first control information includes: the playing information and the screen turning-on control information.

The apparatus 1900 may further include a power component 1926 configured to execute power mangement of the apparatus 1900, a wired or wireless network interface 1950 configured to connect the apparatus 1900 to a network, and an Input/Output (I/O) interface 1958. The apparatus 1900 may be operated on the basis of an operating system stored in the memory 1932, such as Windows ServerTM, Mac OS XTM, UnixTM, LinuxTM or FreeBSDTM.

Other embodiments of the present invention will be apparent to those skilled in the art from consideration of the specification and practice of the present invention disclosed here. This application is intended to cover any variations, uses, or adaptations of the present invention following the general principles thereof and including such departures from the present invention as come within known or customary practice in the art. It is intended that the specification and examples be considered as exemplary only, with a true scope and spirit of the present invention being indicated by the following claims.

It will be appreciated that the present invention is not limited to the exact construction that has been described above and illustrated in the accompanying drawings, and that various modifications and changes may be made without departing from the scope thereof. It is intended that the scope of the present invention only be limited by the appended claims.

### INDUSTRIAL APPLICABILITY

In an embodiment of the invention, by determining the first electronic device to be watched by the user according to the position of the user, determining the playing information of the file currently played by the second electronic device, the playing information including: the identifier of the file and the playing progress of the file, and sending the first control information to the first electronic device to control the first electronic device to play the file from the playing progress, the first control information including: the playing information and the screen turning-on control information, the first electronic device to be watched by the user may be automatically determined according to the position of the user, a screen of the first electronic device to be watched may be controlled to be turned on and the playing information of the file currently played by the second electronic device may be sent to the first electronic device, so that determination of the electronic device to be watched by the user according to the position of the user is implemented, playing of the file from the playing progress is also implemented, and compared with a manner of manually turning on the electronic device and dragging a progress bar by the user, such a manner improves a user experience.

In another embodiment, by acquiring the facial images detected by the cameras of all the electronic devices located at different positions, if the facial image detected by the camera of an electronic device and the preset facial image are facial images of the same user, determining the electronic device to be the first electronic device, receiving the playing information sent by the second electronic device, the playing information being sent when the facial image detected by the second electronic device and the preset facial image are not facial images of the same user, or, the playing information being sent when the second electronic device does not detect any facial image, and sending the first control information to the first electronic device to control the first electronic device to play the file from the playing progress, the first electronic device to be watched by the user may be determined according to whether the facial image detected by the camera of the electronic device and the preset facial image are facial images of the same user or not when being determined according to the position of the user, the playing information sent by the second electronic device is received, and a first electronic device determination process and the playing information have high accuracy, so that the user experience is further improved.

In another embodiment, by acquiring the connecting signal strengths of each of all electronic devices located at different positions with the third electronic device respectively, comparing the connecting signal strengths, determining an electronic device, of which the connecting signal strength is the strongest with the third electronic device, to be the first electronic device, querying the playlist, determining the electronic device which plays the file at the time closest to the current time to be the second electronic device, sending the playing information acquisition request to the second electronic device, receiving the playing information sent by the second electronic device in response to the playing information acquisition request, and sending the first control information to the first electronic device to control the first electronic device to play the file from the playing progress, an electronic device, of which the connecting signal strength is the strongest with the third electronic device, may be determined to be the first electronic device according to the connecting signal strengths, and accuracy is high, so that the user experience is further improved.

## Claims

1. A method for controlling an electronic device, **characterized in that**, the method comprises:
determining (S101) a first electronic device to be watched by a user according to a position of the user;
determining (S102) playing information of a file currently played by a second electronic device, wherein the playing information comprises: an identifier of the file and a playing progress of the file; and
sending (S103) first control information to the first electronic device to control the first electronic device to play the file from the playing progress, wherein the first control information comprises: the playing information and screen turning-on control information.

2. The method according to claim 1, further comprising: after sending (S103) the first control information to the first electronic device,
sending second control information to the second electronic device to control the second electronic device to stop playing and turn off its screen.

3. The method according to claim 1 or 2, further comprising: before determining (S101) the first electronic device to be watched by the user according to the position of the user,
acquiring (S201) facial images detected by cameras of all electronic devices located at different positions,
wherein determining (S101) the first electronic device to be watched by the user according to the position of the user comprises:
if a facial image detected by a camera of an electronic device and a preset facial image are determined as facial images of the same user, determining (S202) the electronic device to be the first electronic device.

4. The method according to claim 1 or 2, further comprising: before determining (S101) the first electronic device to be watched by the user according to the position of the user,
acquiring (S301) signal strengths of connecting signals of all electronic devices located at different positions, wherein a connecting signal of each electronic device is used to connect this electronic device with a third electronic device, wherein the third electronic device is an electronic device worn by the user,
wherein determining (S101) the first electronic device to be watched by the user according to the position of the user comprises:
comparing (S302) the connecting signal strengths with each other, and determining an electronic device, of which the connecting signal strength is the strongest, to be the first electronic device.

5. The method according to claim 3, wherein determining (S102) the playing information of the file currently played by the second electronic device comprises: receiving (S203) the playing information sent by the second electronic device, wherein the playing information is sent when the facial image detected by the second electronic device and the preset facial image are determined not to be facial images of the same user, or, wherein the playing information is sent when the second electronic device does not detect any facial image.

6. The method according to claim 1 or 2, further comprising: before determining (S102) the playing information of the file currently played by the second electronic device, querying (S303) a playlist, and determining an electronic device which plays the file at time that is the closest to the current time to be the second electronic device,
wherein the playlist records corresponding relationship between times at which files are played and electronic devices which play the files,
wherein determining (S102) the playing information of the file currently played by the second electronic device comprises:
sending (S304) a playing information acquisition request to the second electronic device; and
receiving (S305) the playing information sent by the second electronic device in response to the playing information acquisition request.

7. The method according to claim 4, wherein the third electronic device is a wristband, and the connecting signals are Bluetooth signals.

8. An apparatus for controlling an electronic device, **characterized in that**, the apparatus comprises:
a first determination module (41) configured to determine a first electronic device to be watched by a user according to a position of the user;
a second determination module (42) configured to determine playing information of a file currently played by a second electronic device, wherein the playing information comprises: an identifier of the file and a playing progress of the file; and
a first sending module (43) configured to send first control information to the first electronic device to control the first electronic device to play the file from the playing progress, wherein the first control information comprises: the playing information and screen turning-on control information.

9. The apparatus according to claim 8, further comprising:
a second sending module (51) configured to send second control information to the second electronic device to control the second electronic device to stop playing and turn off its screen.

10. The apparatus according to claim 8 or 9, further comprising:
a first acquisition module (61) configured to acquire facial images detected by cameras of all electronic devices located at different positions,
wherein the first determination module (41) comprises:
a first determination sub-module (411) configured to, when the facial image detected by a camera of an electronic device and a preset facial image are determined as facial images of the same user, determine the electronic device to be the first electronic device.

11. The apparatus according to claim 8 or 9, further comprising:
a second acquisition module (71) configured to acquire signal strengths of connecting signals of all electronic devices located at different positions, wherein a connecting signal of each electronic device is used to connect this electronic device with a third electronic device, wherein the third electronic device is an electronic device worn by the user,
wherein the first determination module (41) comprises:
a comparison sub-module (412) configured to compare the connecting signal strengths with each other; and
a second determination sub-module (413) configured to determine an electronic device, of which the connecting signal strength is the strongest, to be the first electronic device.

12. The apparatus according to claim 10, wherein the second determination module (42) comprises:
a first receiving sub-module (421) configured to receive the playing information sent by the second electronic device, wherein the playing information is sent when the facial image detected by the second electronic device and the preset facial image are determined not to be facial images of the same user, or,
wherein the playing information is sent when the second electronic device does not detect any facial image.

13. The apparatus according to claim 8 or 9, further comprising:
a query module configured to query a playlist; and
a third determination module configured to determine an electronic device which plays the file at time that is the closest to the current time to be the second electronic device, wherein the playlist records corresponding relationship between times at which files are played and electronic devices which play the files,
wherein the second determination module comprises:
a sending sub-module configured to send a playing information acquisition request to the second electronic device; and
a second receiving sub-module configured to receive the playing information sent by the second electronic device in response to the playing information acquisition request.

14. An apparatus for controlling an electronic device, comprising:
a processor; and
a memory for storing instructions executable by the processor,
wherein the processor is configured to:
determine a first electronic device to be watched by a user according to a position of the user;
determine playing information of a file currently played by a second electronic device, wherein the playing information comprises: an identifier of the file and a playing progress of the file; and
send first control information to the first electronic device to control the first electronic device to play the file from the playing progress, wherein the first control information comprises: the playing information and screen turning-on control information.

15. A computer program including instructions for executing the steps of a method for controlling electronic device according to any one of claims 1 to 7 when said program is executed by a computer.
